# EUROPÄISCHE PATENTSCHRIFT

(11) **EP 1 344 051 B1**
(45) Veröffentlichungstag und Bekanntmachung des Hinweises auf die Patenterteilung: **26.09.2007**
(21) Anmeldenummer: 01947147.3
(22) Anmeldetag: 12.05.2001
(51) Int. Cl.: G01N 29/22

(54) **ULTRASCHALLPRÜFKOPF, INSBESONDERE FÜR DIE PRÜFUNG PER HAND**
ULTRASONIC PROBE, IN PARTICULAR FOR MANUAL INSPECTIONS
PALPEUR ULTRASONORE, NOTAMMENT POUR EFFECTUER DES VERIFICATIONS MANUELLEMENT

(30) Priorität: 22.11.2000 DE 10058174
(43) Veröffentlichungstag der Anmeldung: 17.09.2003
(73) Patentinhaber: Agfa NDT GmbH, D-50354 Hürth (DE)
(72) Erfinder: BUSCHKE, Paul, 50354 Hürth (DE); KLEINERT, Wolf, 53125 Bonn (DE); THUM, Horst, Guenter, 50739 Köln (DE)
(74) Vertreter: Bauer, Wulf
(86) Internationale Anmeldenummer: PCT/DE2001/001814
(87) Internationale Veröffentlichungsnummer: WO 2002/042762

(56) Entgegenhaltungen:
- EP-A- 0 326 128
- DE-A- 2 309 944
- GB-A- 2 047 047
- US-A- 4 774 842
- US-A- 5 690 110

## Beschreibung

Die Erfindung bezieht sich auf einen Ultraschallprüfkopf, der insbesondere für die Prüfung per Hand geeignet ist. Er hat ein Gehäuse, das einen Ultraschallschwinger aufnimmt und das eine Kontaktfläche für den Kontakt mit der Oberfläche eines zu prüfenden Körpers hat.

Derartige Ultraschallprüfköpfe sind aus umfangreichem Stand der Technik bekannt. Bei der Ultraschallprüfung möchte man für einen Ultraschallbefund möglichst genau den zugehörigen Ort auf dem zu prüfenden Körper kennen. Man möchte also einem Ultraschallbefund jeweils einen Ort zuordnen können. So ist man bestrebt, bei der Schweissnahtprüfung eine aufgefundene Fehlstelle genau lokalisieren zu können. Ebenso möchte man bei der Bestimmung von Restwanddicken eines Rohres oder Behälters genau den Ort auf dem Behälter oder Rohr wissen, an dem ein vorgegebener Ultraschallbefund ermittelt wurde. Dies bedeutet, dass neben dem Ultraschallsignal auch die jeweilige Position des Ultraschallprüfkopfes auf der Oberfläche des zu prüfenden Körpers bekannt sein muss.

Nach dem Stand der Technik gibt es Systeme, die die Position des Ultraschallprüfkopfes ermitteln, z. B. als relative Position des Prüfkopfes in zwei oder drei Achsen zu einem Ort bei Messstart. Derzeitig wird eine Auflösung von 0,1 mm für Längsbewegungen und 0,1° bei Drehbewegungen erreicht. Zusammen mit den relativen Positionsdaten sowie dem jeweiligen Ultraschallbefund kann die absolute Lage einer Fehlerstelle genau ermittelt werden. Ausbesserungsarbeiten oder systematische Überwachungen von Fehlstellen können dadurch wirtschaftlich und gezielt durchgeführt werden.

Die zur Zeit benutzten Verfahren zur Ermittlung der Positionsdaten bei manueller Ultraschallprüfung haben einige entscheidende Nachteile. So sind für die Positionserfassung zusätzliche elektronische Bauteile, z. B. Luftschallsensoren und/oder mechanische Führungen notwendig, die ergonomische Nachteile haben. Die mechanischen Teile können verschleissen, die Luftschallsensoren sind relativ gross, insbesondere aber zu montieren sowie zu justieren. Die Kosten der bekannten Verfahren und der dafür benutzten Vorrichtungen sind hoch.

Hiervon ausgehend hat es sich die Erfindung zur Aufgabe gemacht, einen Ultraschallprüfkopf zu schaffen, der Positionskoordinaten in Abhängigkeit von einem Ort, der bei Messstart vorliegt, auf dem zu prüfenden Körper feststellt und ausgibt. Die Nachteile der bisher bekannten Systeme sollen dabei vermieden werden.

Diese Aufgabe wird gelöst durch einen Ultraschallprüfkopf, insbesondere für die Prüfung per Hand
- mit einem Gehäuse, das einen Ultraschallschwinger aufnimmt und das eine Kontaktfläche für einen Kontakt mit einer Oberfläche eines zu prüfenden Körpers hat,
- mit mindestens einer Digitalkamera, die dem Gehäuse zugeordnet ist, die so ausgerichtet ist, dass sie die Oberfläche des Körpers erfasst und die in Zeitabständen jeweils ein elektronisches Bild von Teilstücken der Oberfläche des Körpers liefert,
- mit einer Schaltung für Bildverarbeitung, die einen Bildspeicher für mindestens ein von der Digitalkamera erfasstes elektronisches Bild aufweist, die einen Vergleicher hat, der zwei von der Digitalkamera zu unterschiedlichen Zeitpunkten erfasste elektronische Bilder von überlappenden Teilstücken der Oberfläche des Körpers vergleicht und daraus die Verschiebung des Gehäuses gegenüber der Oberfläche ermittelt und ausgibt und
- mit einem Bewegungsspeicher, der die Verschiebung des Gehäuses ausgehend von einem Ort zum Zeitpunkt des Messstarts speichert und die aktuelle Position des Gehäuses bezüglich dieses Orts enthält.

Bei diesem Ultraschallprüfkopf handelt es sich zunächst um einen klassischen Ultraschallprüfkopf, der die üblichen Merkmale eines derartigen Prüfkopfes aufweist. Verwiesen wird beispielsweise auf das DE-Buch J. Krautkrämer & K. Krautkrämer "Werkstoffprüfung mit Ultraschall", 6. Auflage, Springer-Verlag. Der Ultraschallprüfkopf kann also konventionell wie ein üblicher Ultraschallprüfkopf eingesetzt werden. Er ist beispielsweise als SE-Prüfkopf ausgeführt.

Zusätzlich hat der erfindungsgemässe Ultraschallprüfkopf noch Mittel, die dazu dienen, die jeweilige Position auf der Oberfläche des zu prüfenden Körpers in Bezug auf einen Ort anzugeben, der zum Zeitpunkt des Messstartes vorlag.

Hierzu ist mindestens eine Digitalkamera mit dem Gehäuse fest verbunden. Vorzugsweise ist die Digitalkamera im Gehäuse angeordnet. Sie ist so ausgerichtet, dass sie die Oberfläche des zu prüfenden Körpers erfasst. Dabei soll sie möglichst nahe an der Stelle ein Bild dieser Oberfläche liefern, an der ein Zentralstrahl des aktiven Schallelements die Oberfläche durchtritt.

Mittels dieser Digitalkamera wird in Zeitabständen ein elektronisches Bild (Frame) von dem Teilstück der Oberfläche erfasst, das sich jeweils unter der Linse der Digitalkamera befindet, das also in der Gegenstandsebene liegt. Es handelt sich dabei um ein relativ kleines Teilstück der Gesamtoberfläche des zu prüfenden Körpers. Das Teilstück kann beispielsweise die Abmessungen von wenigen mm, beispielsweise 2 x 2 bis 4 x 4 mm haben. Vorzugsweise wird in vorgegebenen festen Zeitabständen von der Digitalkamera ein Bild des jeweiligen Teilstücks der Oberfläche aufgenommen.

In der der Digitalkamera nachgeordneten Schaltung für Bildverarbeitung wird in einem Bildspeicher mindestens ein Bild gespeichert, das die Digitalkamera aufgenommen hat. Dieses Bild wird mit einem später erfassten Bild der Digitalkamera im Vergleicher verglichen. Der Vergleicher verschiebt die beiden elektronischen Bilder solange gegeneinander, bis die Bilder zueinander passen, also übereinstimmende Bildbereiche sich in Deckung befinden. Dies bedeutet, dass der zeitliche Abstand, an dem die beiden zu vergleichenden elektronischen Bilder aufgenommen worden sind, nicht grösser sein darf als die Zeit, innerhalb welcher das Gehäuse um eine Strecke verschoben wird, die grösser ist als die Bilddiagonale des erfassten elektronischen Bildes. Ist nämlich letzteres der Fall, sind keine übereinstimmenden Teilbereiche mehr in den zu vergleichenden elektronischen Bildern enthalten und kann somit kein Vergleich stattfinden.

Aus der notwendigen Verschiebung der beiden Einzelbilder, die im Vergleicher verglichen worden sind, zueinander, bis Deckung erreicht ist, lässt sich die tatsächliche Verschiebung auf der Oberfläche des zu prüfenden Körpers errechnen. Es geht im wesentlichen der Abbildungsmassstab der Optik ein. Demgemäss kann ein Positionssignal ausgegeben werden, das die Verschiebung des Prüfkopfes zwischen dem Zeitpunkt, an dem das erste elektronische Bild aufgenommen wurde und dem Zeitpunkt, an dem das zweite elektronische Bild aufgenommen wurde, angibt. Aus der Summe der einzelnen Verschiebungsinformationen wird ausgehend vom Ort zum Zeitpunkt des Messstarts die jeweilige aktuelle Position des Prüfkopfes auf der Oberfläche des zu prüfenden Körpers erhalten.

Grundlage für die Positionserfassung bildet also ein optisches System. Die Digitalkameras sind vorzugsweise mit CCD-Sensoren ausgerüstet. Dem Gegenstandsfeld der Digitalkamera ist vorzugsweise ein Leuchtmittel zugeordnet, um das zu erfassende Teilstück der Oberfläche zu beleuchten. Wird nun der Prüfkopf bewegt, so wird aus den Positionsinformationen, die im Bewegungsspeicher enthalten sind, die aktuelle Position ermittelt.

Die elektronischen und optischen Mittel, die für die Positionsbestimmung eingesetzt werden, lassen sich heute sehr klein und auch kostengünstig erhalten. Damit kann die komplette Bildauswertung in einem Gehäuse eines üblichen Ultraschallprüfkopfes untergebracht werden. Mittels des Ultraschallprüfkopfes nach der Erfindung kann insbesondere die Bewertung von räumlich kleinen Fehlern parallel zur Oberfläche des zu prüfenden Körpers erfolgen. Es können bei der Prüfung von Schweissnähten, z. B. bei Rohren, Pipelines oder im Behälter- und Kesselbau die Orte der jeweiligen Stellen mit einem Befund angegeben werden.

Hierbei erlaubt die Benutzung von SE-Prüfköpfen eine vereinfachte Anwendung der Ermittlung von Ortskoordinaten. Der Sende- und Empfangsschwinger des Ultraschallprüfkopfes ist getrennt durch einen Dämpfungssteg in einem Gehäuse untergebracht. Durch mindestens eine Digitalkamera lässt sich die Position von zwei Achsen speziell für diese Prüfköpfe auf einfachste Art ermitteln. Damit kann man beispielsweise günstig die Restwanddicke an gekrümmten Rohren ermitteln.

Im Bewegungsspeicher erfolgt die Aufsummierung der Weginformation. Dadurch lassen sich Prüfungen wirtschaftlich bei verbesserter Ergonomie durchführen. Ein Prüfer, der den Prüfkopf führt, hat optimale Bedingungen bei der Durchführung seiner Prüfung. Es gibt keine mechanischen Verschleissteile, die Prüfsicherheit ist im Verhältnis zur Prüfung ohne zusätzliche Information der Ortskoordinaten deutlich erhöht. Gegenüber mechanischen Systemen zur Positionserfassung werden Kosten bis zu 60 % eingespart. Eine umfassende Dokumentation der Prüfung ist möglich.

In einer besonders bevorzugten Weiterbildung sind zwei Digitalkameras vorgesehen, die im Abstand voneinander am Gehäuse angeordnet sind, denen jeweils eine eigene Schaltung für Bildverarbeitung nachgeschaltet ist und mit einer Auswertestufe für Drehungen, an der die Ausgänge der beiden Schaltungen für Bildverarbeitung anliegen. Aus den unterschiedlichen Informationen über die Position des Gehäuses aus diesen beiden Schaltungen für Bildverarbeitung wird eine Verdrehung des Gehäuses gegenüber einem früheren Drehzustand ermittelt und ausgegeben. Ein Drehspeicher enthält die Drehinformation ausgehend von einem Drehzustand zum Zeitpunkt des Messstarts.

Bei Benutzung von zwei Digitalkameras lässt sich über Transformationsfunktionen sehr einfach auch die Position des Drehwinkels des Prüfkopfs um die eigene Achse ermitteln. Zwar könnte man diese grundsätzlich auch mit einer einzigen Digitalkamera erfassen, dann müsste man aber den Bildvergleich im Vergleicher so durchführen, dass die elektronischen Bilder nicht nur in zwei Richtungen solange in Pixelsprüngen gegeneinander verschoben werden, bis ein Teilbereich Übereinstimmung zeigt, vielmehr müssten auch Drehungen der beiden verglichenen elektronischen Bilder zueinander durchgeführt werden. Dadurch wird der Aufwand und die Zeit der elektronischen Auswertung im Vergleicher deutlich erhöht. Insoweit ist der Einbau einer zweiten Digitalkamera eine einfache und günstige Lösung.

In der Ausführung mit zwei Digitalkameras ist ein Drehspeicher vorgesehen, der die ermittelte Drehinformation ausgehend vom Zustand beim Messstart speichert. Auf diese Weise ist die jeweilige Gesamtdrehung gegenüber dem Zustand bei Messstart bekannt.

In einer bevorzugten Weiterbildung ist ein Signalspeicher vorgesehen, der in fester Zuordnung zum Bewegungsspeicher die jeweils an einer Position vorliegende Ultraschallinformation zusammengestellt mit der Positionsinformation abspeichert. Auf diese Weise ist ein einfacher Zugriff auf das Ultraschallprüfungsergebnis möglich. Es kann eine Auswertung in verschiedener Form erfolgen. Besonders bevorzugt ist dabei, wenn immer dann, wenn ein kritischer Ultraschallbefund erhalten wird, beispielsweise eine voreingestellte Schwelle im Signal überschritten wird, eine Anzeige auf einem Anzeigegerät erfolgt. Auf diese Weise werden Fehlstellen und andere Ungänzen im zu prüfenden Körper optisch z.B. auf einem Monitor dargestellt. Damit ist eine einfache weitere Verarbeitung der erhaltenen Informationen möglich.

Als sehr vorteilhaft hat sich ein Startschalter erwiesen. Er ist vorzugsweise am Gehäuse des Ultraschallprüfkopfes angeordnet. Ihm können gleichzeitig und unabhängig voneinander verschiedene Funktionen zugewiesen werden. So wird bei Betätigen des Startschalters der Bewegungsspeicher rückgesetzt und startet die Aufsummation der nachfolgend gelieferten Bewegungsinformationen neu. Weiterhin kann durch den Startschalter die optische und elektronische Einheit für die Positionserfassung gestartet werden. Dadurch kann diese sich zuvor in einer stromsparenden Abschaltfunktion befinden. Hierzu gehört, dass das Beleuchtungsmittel abgeschaltet sein kann.

Es ist möglich, aber nicht notwendig, zwischen Ultraschallprüfkopf und Oberfläche des zu prüfenden Körpers ein Ankopplungsmittel, beispielsweise Wasser, vorzusehen. Es hat sich gezeigt, dass hierdurch die Funktion des optischen Nachweises der Position nicht beeinträchtigt wird.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
Fig. 1: Einen Ultraschallprüfkopf, der als SE-Prüfkopf ausgebildet, ist in schematischer Darstellung in Seitenansicht,
Fig. 2: eine Darstellung eines Ultraschallprüfkopfes ähnlich Figur 1, jedoch nunmehr mit zwei Digitalkameras,
Fig. 3: ein Blockschaltbild für einen Ultraschallprüfkopf ähnlich Figur 1,
Fig. 4: ein Blockschaltbild für einen Ultraschallprüfkopf ähnlich Figur 2 und
Fig. 5: eine Darstellung eines Monitors mit Wiedergabe eines zu prüfenden Körpers, der eine Fehlstelle aufweist.

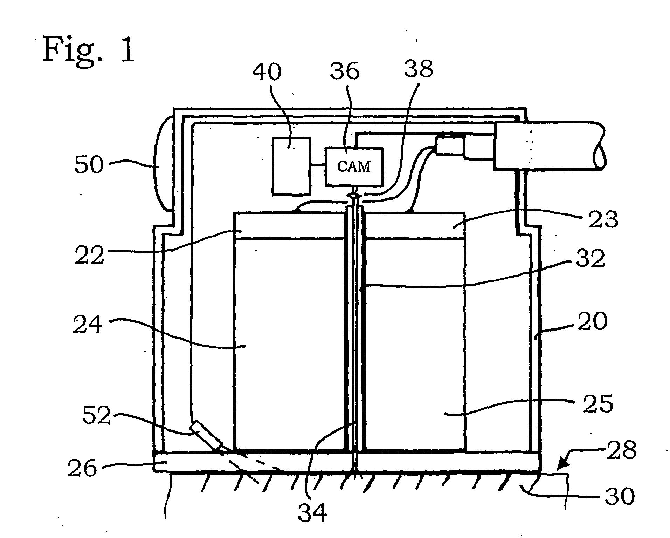

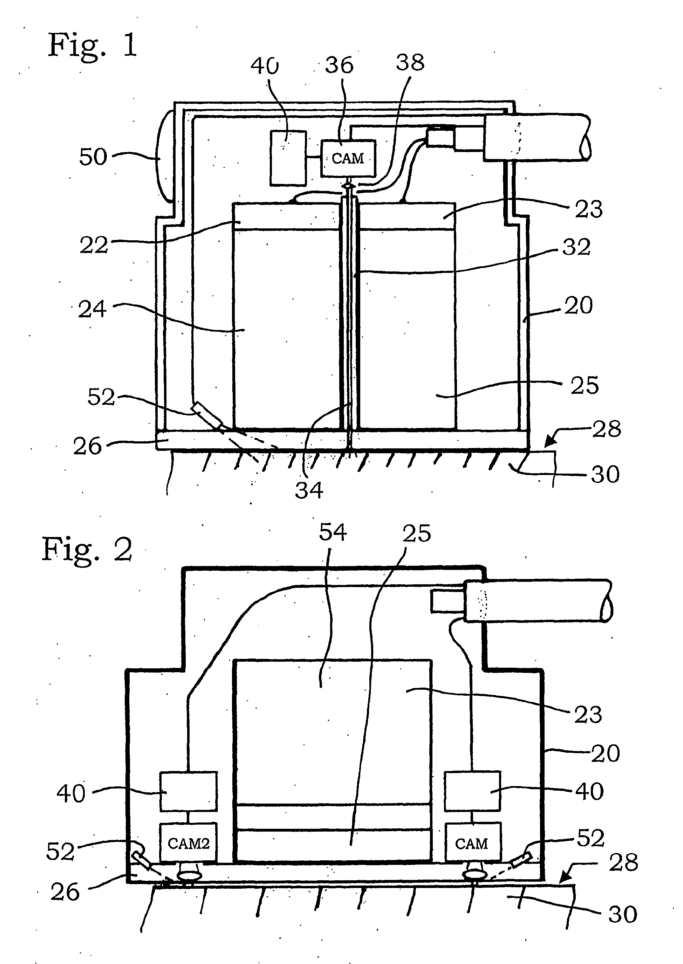

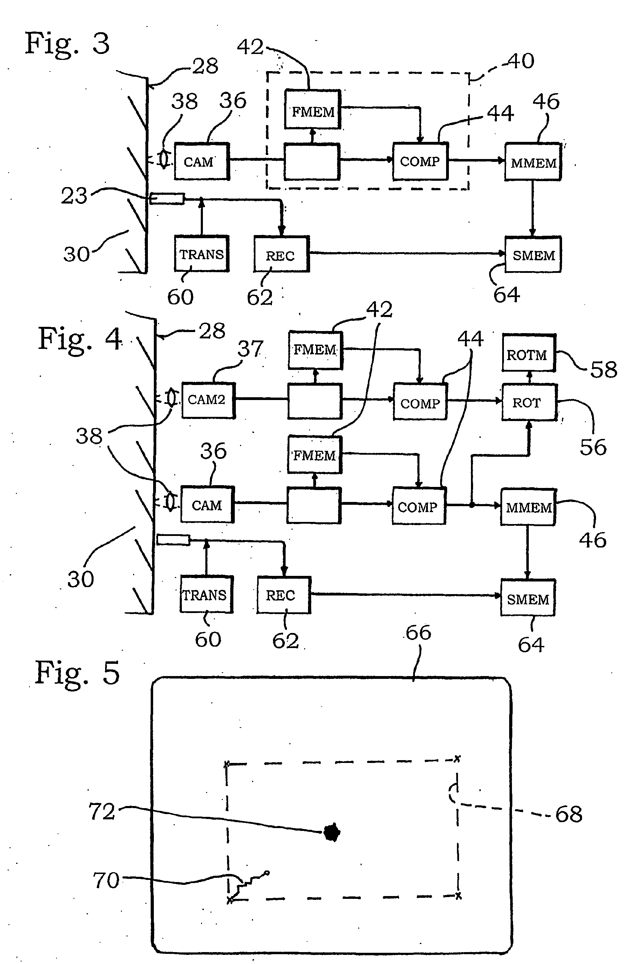

Die Ultraschallprüfungsköpfe sind für die zerstörungsfreie Werkstoffprüfung bestimmt. Die Prüfung erfolgt nach dem Impuls-Echo-Verfahren. Der Ultraschallprüfkopf nach Figur 1 und 3 hat ein Gehäuse 20 für die Aufnahme von Ultraschallschwingern. Gezeigt sind ein Sendeschwinger 22 und ein Empfangsschwinger 23. Der Sendeschwinger 22 ist auf einen Vorlaufkörper 24 aufgesetzt, der Empfangsschwinger 23 ist auf einen Vorlaufkörper 25 aufgesetzt. Beide Vorlaufkörper 24, 25 befinden sich auf einem Schutzkörper 26, der eine Vorlauf- und Schutzschicht bildet. Dieser Schutzkörper 26 ist in Kontakt mit einer Oberfläche 28 eines zu prüfenden Körpers 30. Der Schutzkörper 26 besteht aus einem transparenten, vorzugsweise glasklaren Material, beispielsweise Acryl. Eine untere, frei zugängliche Fläche des Schutzkörpers 26 bildet die Kontaktfläche für den Kontakt des Gehäuses 20 mit der Oberfläche 28 des zu prüfenden Körpers 30.

Wie bei SE-Prüfköpfen häufig anzutreffen, befindet sich zwischen dem Sendeschwinger 22 und seinem Vorlaufkörper 24 auf der einen Seite und dem Empfangsschwinger 23 und seinem Vorlaufkörper 25 auf der anderen Seite ein Dämpfungssteg 32, der ein Distanzstück bildet. Dieser hat ein Loch, durch das ein Lichtleiter 34 hindurchgeführt ist. Anstelle eines Lichtleiters kann auch ein Lichtleiterbündel benutzt werden. Der Lichtleiter 34 endet innerhalb des Schutzkörpers 26 und in Nähe der Oberfläche 28, auf die er gerichtet ist (siehe gestrichelte Linien). Er überträgt das Bild eines kleinen Teilstücks der Oberfläche 28 zu einer Digitalkamera 36, die sich innerhalb des Gehäuses 20 befindet. Sie wird mit auch CAM bezeichnet. Als Digitalkamera wird dabei ein optischer reflektiver Sensor HDNS-2000 der Firma HP verwendet. Ihm ist eine Linse 38 zugeordnet, die von der gleichen Firma unter HDNS-2100 geliefert wird. Es können aber auch andere Digitalkameras eingesetzt werden.

Die Digitalkamera 36 hat eine lichtempfindliche Anordnung, die insbesondere als CCD ausgebildet ist und eine flächige Anordnung (Matrix) von Pixeln aufweist. Auf diese Anordnung bildet die Linse 38 das betrachtete Teilstück der Oberfläche 28 ab.

Die Digitalkamera 36 erfasst in periodischen Zeitabständen elektronische Bilder, die im folgenden auch Frames genannt werden, des betrachteten Teilstücks der Oberfläche 28. Typischerweise wird alle 8 ms ein Frame erfasst.

Der Digitalkamera 36 ist eine Schaltung zur Bildverarbeitung 40 nachgeschaltet. Sie hat einen Bildspeicher 42, der auch als FMEM bezeichnet ist, für mindestens einen von der Digitalkamera 36 erfassten Frame. Insbesondere handelt es sich dabei um den vorletzten von der Kamera erfassten Frame, der im Bildspeicher 42 abgespeichert ist. Er wird in einem Vergleicher 44, der auch als COMP bezeichnet ist, mit dem aktuellen Frame verglichen. Dabei werden die beiden Frames so parallel zu den Reihen und Zeilen der Pixel pixelweise verschoben, bis übereinstimmende Bildbereiche des Frames gefunden werden. Dies setzt voraus, dass die Frames überlappende Teilstücke der Oberfläche des zu prüfenden Körpers 30 enthalten. Aus der Verschiebung der beiden Frames in der Bildebene der Digitalkamera 36 kann dann die Verschiebung in der Gegenstandsebene, also auf der Oberfläche 28 des zu prüfenden Körpers 30 errechnet werden. Hierbei ist im wesentlichen das Abbildungsverhältnis der Digitalkamera 36 einschliesslich ihrer Linse 38 zu berücksichtigen.

Als Ergebnis übergibt die Schaltung 40 zur Bildverarbeitung einem Bewegungsspeicher, der auch als MMEM bezeichnet wird, die Information über die Verschiebung des Gehäuses 20 zwischen den Zeitpunkten, an denen die beiden verglichenen Frames erfasst wurden. Der Bewegungsspeicher 46 speichert kontinuierlich die ihm übergebenen Verschiebungen. Die Verschiebungen werden im einem rechtwinkligen Koordinatensystem als x-Werte und y-Werte übergeben. Damit ist im Bewegungsspeicher 46 immer die aktuelle Position des Gehäuses 20 enthalten.

Die Aufsummierung der Bewegungen im Bewegungsspeicher 46 erfolgt ausgehend von einem Ort 48, den das Gehäuse zum Zeitpunkt eines Messstarts hat. Der Messstart wird durch einen Startschalter 50 eingegeben. Wird der Startschalter 50 betätigt, wird der Bewegungsspeicher 46 zunächst zurückgesetzt oder in einen Nullzustand gebracht. Er speichert sodann alle ihm übergebenen Bewegungsinformationen, also die Inkremente in zwei Richtungen. Die Information des Bewegungsspeichers 46 kann auf einem Monitor 52 dargestellt werden, hierauf wird später noch eingegangen.

Wie Figur 1 zeigt, wird das betrachtete Teilstück der Oberfläche 28 durch ein Leuchtmittel 52, das hier als LED ausgeführt ist, beleuchtet. Vorzugsweise erfolgt die Beleuchtung streifend zur Oberfläche 28, damit die Digitalkamera 36 möglichst viele Konturen erfassen kann. Es ist vorteilhaft, das Leuchtmittel 52 erst dann einzuschalten, wenn der Startschalter 50 betätigt wurde. Die Schaltung 40 schaltet dann, wenn einige nacheinander eintreffende Frames völlig übereinstimmen und damit keine Bewegung des Gehäuses 20 festzustellen ist, in einen Stromsparmodus.

Wie Figur 1 zeigt, ist das Leuchtmittel 52 so im Gehäuse 20 angeordnet, dass der transparente Schutzkörper 26 durchstrahlt wird. Es kann auch im Schutzkörper 26 untergebracht sein. Wenn zwischen Schutzkörper 26 und Oberfläche 28 ein Ankopplungsmittel verwendet werden soll, wird vorzugsweise ein völlig transparentes Mittel, beispielsweise Wasser, benutzt.

Im Gegensatz zu der Ausführung des Prüfkopfes nach den Figuren 1 und 3 hat der Prüfkopf nach den Figuren 2 und 4 zwei Digitalkameras 36 und 37, siehe auch CAM und CAM 2. Sie sind im Abstand voneinander im Gehäuse 20 untergebracht, konkret sind sie zu beiden Seiten eines Schwingers 23 positioniert. Diesem Schwinger 23, der auch ein Sendeschwinger sein kann, ist rückwärtig ein Dämpfungskörper 54 zugeordnet. In Schallausbreitungsrichtung befindet sich ein Vorlaufkörper 25, der wiederum mit einem Schutzkörper 26 in Kontakt steht.

Die Anordnung von zwei Digitalkameras 36, 37 und zwei Leuchtmitteln 52 ist im wesentlichen eine Verdopplung der Anordnung gemäss Figur 1. Im Gegensatz zur Ausführung nach Figur 1 wird aber nunmehr nicht eine Lichtleiteroptik benutzt, um das Bild eines Teilstücks der Oberfläche 28 zur Digitalkamera 36 zu übertragen, vielmehr sind die jeweiligen Linsen 38 der Digitalkameras 36, 37 im Schutzkörper 26 untergebracht. Sie können auch auf seine obere Oberfläche oder in ihrer Nähe aufgebracht sein.

Die zusätzliche Funktion, die durch die zweite Digitalkamera 37, auch CAM 2 genannt, erhalten wird, wird im folgenden unter Bezugnahme auf Figur 4 erläutert. Diese Figur zeigt die beiden Digitalkameras 36, 37, denen jeweils eine Schaltung 40 zur Bildverarbeitung nachgeschaltet ist. Die Oberfläche 28 des Körpers 30 ist dargestellt. Ein Teilstück dieser Oberfläche wird jeweils erfasst, die Teilstücke befinden sich im Abstand voneinander. Am Ausgang der jeweiligen Schaltung 40 zur Bildverarbeitung liegen die Informationen über die Positionsinkremente jeder einzelnen Digitalkamera 36, 37 vor. Diese Informationen werden nun wie folgt verarbeitet: Für die Bestimmung der Position wird nur die in Figur 4 untere Digitalkamera 36 verwendet, insoweit ist keine Änderung gemäss Figur 2 festzustellen. Die obere Digitalkamera 37 wird nur insoweit verwendet, als sie im Zusammenhang mit der unteren Digitalkamera 36 eine Information über die Drehung des Gehäuses 20 liefert. Hierzu werden die Verschiebungsinformationen beider Schaltungen 40 zur Bildverarbeitung einer Auswertestufe 56, auch ROT genannt, zugeleitet. In dieser werden die einzelnen Inkremente verglichen und wird die jeweilige Verdrehung des Gehäuses 20, die zwischen den betrachteten Frames festgestellt werden kann, ermittelt. Dieser Auswertestufe 56 ist ein Drehspeicher 58, auch ROTM genannt, nachgeschaltet. In diesem wird der Drehzustand des Gehäuses 20 ausgehend von dem Zustand am Ort 58 zum Zeitpunkt des Messstarts gespeichert.

Wie bereits ausgeführt wurde, werden von den Digitalkameras 36, 37 alle 8 ms Frames erfasst. Anschliessend erfolgt die Bildauswertung. Hierfür wird nur sehr wenig Zeit benötigt, die Zeit für die Bildauswertung liegt unter 1 ms. Eine kurze Bildauswertung wird dadurch erreicht, dass die zu vergleichenden Frames in der Vergleicherstufe 44 nur in Reihen- und Zeilenrichtung der Pixel pixelweise verschoben werden müssen. Eine Rotation der Frames gegeneinander wird nicht durchgeführt. Grundsätzlich ist im Vergleicher 44 aber auch eine Rotation der einzelnen Frames gegeneinander möglich. Dann ist eine zweite Digitalkamera 37 nicht erforderlich.

In den Figuren 3 und 4 ist auch jeweils noch eine Ultraschallanordnung eingezeichnet. Dargestellt ist ein Schwinger 23, der hier ohne weitere Zusatzkörper abgebildet ist. Er ist einerseits mit einem Sender 60, hier auch TRANSM genannt, verbunden, andererseits mit einem Empfänger 62, hier auch REC genannt. Dem Empfänger 62 ist ein Speicher 64 nachgeschaltet, der auch als SMEM bezeichnet wird. Dieser Speicher 64 ist auch mit dem Bewegungsspeicher 46 verbunden. Im Speicher 64 werden der Ultraschallbefund, wie er aus dem Empfänger 62 nach Auswertung erhalten wird, und die jeweilige Position, an der dieser Ultraschallbefund erhalten wurde, abgespeichert. Die jeweilige Position bezieht sich auf den Ort 48.

In einer vorteilhaften Weiterbildung ist dem Ultraschallprüfkopf eine Einrichtung zur Positionsbestimmung, beispielsweise eine Schaltung zur globalen Positionierung nach dem Verfahren GPS, zugeordnet. Auf diese Weise wird der Ort 48, der beim Messstart vorliegt, absolut bestimmt. Diese absolute Bestimmung wird im Bewegungsspeicher 46 bzw. im Speicher 64 aufgezeichnet.

Figur 5 zeigt die Darstellung eines Ultraschallmessvorgangs mit dem erfindungsgemässen Ultraschallprüfkopf auf einem Monitor 66. Verwendet wurde ein Ultraschallprüfgerät der Anmelderin vom Typ USD 15 mit einer Schwingeranordnung mit Vorlaufkörper usw. vom Typ CLF 4, der zusätzlich mit der erfindungsgemässen Einrichtung zur Positionsbestimmung ausgerüstet war, also entsprechend Figur 1 aufgebaut ist.

Als zu überprüfendes Werkstück, also als Körper 30, wurde eine Stahlplatte mit rechteckförmigem Zuschnitt benutzt. In diese war eine Bohrung von 3 mm Durchmesser und 2,5 mm Tiefe eingebracht. Die Blende des Gerätes USD 15 wurde wie folgt eingestellt: Anfang 2 mm, Breite 1 mm. Damit musste die Bohrung ein Fehlersignal liefern.

Der Prüfkopf wurde zunächst an einer Ecke des Körpers 30 positioniert. Dann wurde der Startschalter 50 gedrückt und eine benachbarte Ecke angefahren. Dies wurde wiederholt, bis der Umfang des Körpers 30 abgefahren war. Dadurch konnte man die gestrichelt dargestellte Kontur 68 erhalten, die auf dem Monitor 66 sichtbar ist.

Als Ort 48 für den Beginn der Messungen wurde der untere linke Eckpunkt des Körpers 30 gewählt. Es wurde dort der Startschalter 50 betätigt. Der Anfang der Überprüfung ist schematisch dargestellt anhand eines Weges 70. Der komplette Prüfweg, mit dem der Prüfkopf über die Oberfläche 28 des Körpers 30 geführt wurde, ist nicht dargestellt. Es ist möglich, den Prüfweg darzustellen. Dies würde aber die Lesbarkeit der Zeichnung im konkreten Fall beeinträchtigen. In Figur 5 ist immer nur dann eine Schreibinformation an den Monitor 66 bzw. den vorgeschalteten Rechner gegeben worden, wenn das Gerät USD 15 ein Fehlersignal lieferte. Dadurch kam es beim Überfahren der Bohrung zu kurzen schwarzen Strichen, die insgesamt ein Bild 72 des Fehlers wiedergeben. Zu sehen ist ein etwa kreisförmiger, schwarzer Fleck. Auf diese Weise ist eine genaue Lokalisierung des Fehlers erreicht.

## Patentansprüche

1. Ultraschallprüfkopf, insbesondere für die Prüfung per Hand
- mit einem Gehäuse (20), das einen Ultraschallschwinger aufnimmt und das eine Kontaktfläche für einen Kontakt mit einer Oberfläche (28) eines zu prüfenden Körpers (30) hat,
- mit mindestens einer Digitalkamera (36), die dem Gehäuse (20) zugeordnet ist, die vorzugsweise im Gehäuse (20) untergebracht ist, die so ausgerichtet ist, dass sie die Oberfläche (28) des Körpers (30) erfasst und die in Zeitabständen jeweils ein elektronisches Bild von Teilstücken der Oberfläche (28) des Körpers (30) liefert,
- mit einer Schaltung für Bildverarbeitung (40), die einen Bildspeicher (42) für mindestens ein von der Digitalkamera (36) erfasstes elektronisches Bild aufweist, die einen Vergleicher (44) hat, der zwei von der Digitalkamera (36) zu unterschiedlichen Zeitpunkten erfasste elektronische Bilder von überlappenden Teilstücken der Oberfläche (28) des zuprüfenden Körpers (30) vergleicht und daraus die Verschiebung des Gehäuses (20) gegenüber der Oberfläche (28) ermittelt und ausgibt und
- mit einem Bewegungsspeicher (46), der die Verschiebung des Gehäuses (20) ausgehend von einem Ort (48) zum Zeitpunkt des Messstarts speichert und die aktuelle Position des Gehäuses (20) bezüglich dieses Orts (48) enthält.

2. Ultraschallprüfkopf nach Anspruch 1, **dadurch gekennzeichnet, dass** zwei Digitalkameras (36, 37) vorgesehen sind, die im Abstand voneinander am Gehäuse (20) angeordnet sind, denen jeweils eine eigene Schaltung für Bildverarbeitung (40) nachgeschaltet ist und mit einer Auswertestufe (56) für Drehungen, an der die Ausgänge der beiden Schaltungen für Bildverarbeitung (40) anliegen und die aus den unterschiedlichen Informationen über die Position des Gehäuses (20) aus diesen beiden Schaltungen für Bildverarbeitung eine Verdrehung des Gehäuses (20) gegenüber einem früheren Drehzustand ermittelt und ausgibt und mit einem Drehspeicher (58), der die Drehinformation ausgehend von einem Drehzustand zum Zeitpunkt des Messstarts enthält.

3. Ultraschallprüfkopf nach Anspruch 1, **dadurch gekennzeichnet, dass** dem Gehäuse (20) ein Leuchtmittel (52) zugeordnet ist, insbesondere ein Leuchtmittel (52) in dem Gehäuse (20) angeordnet ist, das so ausgerichtet ist, dass der von der Digitalkamera (36) erfasste Bereich der Oberfläche (28) des Körpers (30) ausgeleuchtet ist.

4. Ultraschallprüfkopf nach Anspruch 3, **dadurch gekennzeichnet, dass** das Leuchtmittel (52) in einem möglichst flachen Winkel auf die Oberfläche (28) des Körpers (30) einstrahlt.

5. Ultraschallprüfkopf nach Anspruch 1, **dadurch gekennzeichnet, dass** ein Startschalter (50) vorgesehen ist, der vorzugsweise am Gehäuse (20) angeordnet ist, und dass mit diesem Startschalter (50) der Bewegungsspeicher (46) den Ort (48), der zum Zeitpunkt des Betätigens des Startschalters (50) vorliegt, als neuer Ausgangsort für weitere Bewegungen speichert.

6. Ultraschallprüfkopf nach Anspruch 1, **dadurch gekennzeichnet, dass** er einen Schutzkörper 26 aufweist, der eine frei zugängliche Begrenzungsfläche des Gehäuses (20) ausbildet, die die Kontaktfläche darstellt, und dass dieser Schutzkörper (26) transparent, möglichst glasklar transparent ist, insbesondere aus Acryl gefertigt ist.

7. Ultraschallprüfkopf nach Anspruch 6, **dadurch gekennzeichnet, dass** die Digitalkamera (36, 37) auf der Innenseite des Schutzkörpers (26) angeordnet ist.

## Claims

1. An ultrasonic probe, more specifically for manual inspection
- with a housing (20) that accommodates an ultrasonic crystal and has a contact surface for contact with the surface (28) of a body (30) to be inspected,
- with at least one digital camera (36) that is assigned to said housing (20), that is preferably accommodated in the housing (20), that is oriented in such a manner that it acquires the surface (28) of the body (30) and periodically delivers an electronic image of respective portions of the surface (28) of the body (30),
- with a circuit for image processing (40) that has an image memory (42) for at least one electronic image acquired by the digital camera (36), that has a comparator (44) which compares two electronic images, acquired at different times by the digital camera (36), of overlapping portions of the surface (28) of the body (30) to be inspected and determines therefrom the displacement of the housing (20) relative to the surface (28), which is then output, and
- with a motion memory (46) that stores the displacement of the housing (20) starting from a location (48) at the beginning of the measurement and contains the actual position of the housing (20) with respect to said location (48).

2. The ultrasonic probe according to claim 1, **characterized in that** two digital cameras (36, 37) are provided, said cameras being spaced apart on the housing (20), each of them having a circuit for image processing (40) of its own connected downstream thereof and being provided with an evaluation step (56) for rotations at which the outputs of the two circuits for image processing (40) are applied and which determines, from the various information about the position of the housing (20) obtained from said two circuits for image processing, a rotation of the housing (20) relative to a previous rotational condition, said rotation being then output, and with a rotation memory (58) that contains the rotation information starting from a rotational condition at the beginning of the measurement.

3. The ultrasonic probe according to claim 1, **characterized in that** the housing (20) is assigned a lighting means (52), more specifically that a lighting means (52) is disposed in the housing (20), said lighting means being oriented so as to illuminate the region of the surface (28) of body (30) acquired by the digital camera (36).

4. The ultrasonic probe according to claim 3, **characterized in that** the rays of the lighting means (52) impinge upon the surface (28) of body (30) at the shallowest angle possible.

5. The ultrasonic probe according to claim 1, **characterized in that** there is provided a start switch (50) preferably disposed on the housing (20) and that with said start switch (50) the motion memory (46) stores the location (48) available when the start switch (50) is being actuated as being the new starting location for further movement.

6. The ultrasonic probe according to claim 1, **characterized in that** it is provided with a protective body (26) forming a freely accessible boundary surface of the housing (20), said boundary surface constituting the contact surface, and that said protective body (26) is transparent, if possible clear and transparent, and is more specifically made from an acrylic material.

7. The ultrasonic probe according to claim 6, **characterized in that** the digital camera (36, 37) is disposed on the inner side of the protective body (26).

## Revendications

1. Palpeur ultrasons, notamment pour le contrôle manuel
- avec un boîtier (20) recevant un oscillateur ultrasons et ayant une surface de contact pour un contact avec une surface (28) d'un corps (30) qu'il y a lieu de contrôler,
- avec au moins une caméra numérique (36) qui est associée au boîtier (20), qui est de préférence logée dans le boîtier (20), qui est orientée de manière à capter la surface (28) du corps (30) et qui fournit, à intervalles de temps, une image électronique respective de parties de la surface (28) du corps (30),
- avec un circuit pour le traitement (40) de l'image qui comporte une mémoire (42) d'images pour au moins une image électronique captée par la caméra numérique (36), qui a un comparateur (44) qui compare deux images électroniques, captées à des moments différents par la caméra numérique (36), de parties se chevauchant de la surface (28) du corps (30) qu'il y a lieu de contrôler et qui en déduit le déplacement du boîtier (20) par rapport à la surface (28) qu'il édite et
- avec une mémoire (46) de mouvement qui mémorise le déplacement du boîtier (20) à partir d'un endroit (48) au moment du début de la mesure et la position actuelle du boîtier (20) par rapport à cet endroit (48).

2. Palpeur ultrasons selon la revendication 1, **caractérisé en ce que** deux caméras numériques (36, 37) sont prévues qui sont disposées avec un écart entre elles sur le boîtier (20), en aval de chacune desquelles est monté un circuit propre à chacune d'elles pour le traitement (40) de l'image, et avec un étage d'évaluation (56) pour des rotations auquel sont relevées les sorties des deux circuits de traitement (40) de l'image et qui détermine et édite, à partir des différentes informations concernant la position du boîtier (20) fournies par ces deux circuits de traitement de l'image, une rotation du boîtier (20) par rapport à un état rotationnel antérieur, et avec une mémoire (58) de rotation qui contient l'information rotationnelle à partir d'un état rotationnel au moment du début de la mesure.

3. Palpeur ultrasons selon la revendication 1, **caractérisé en ce qu'**une lampe (52) est associée au boîtier (20), notamment qu'une lampe (52) est disposée dans le boîtier (20), cette lampe étant orientée de manière à ce que la zone de la surface (28) du corps (30) captée par la caméra numérique (36) est illuminée.

4. Palpeur ultrasons selon la revendication 3, **caractérisé en ce que** la lumière de la lampe (52) frappe la surface (28) du corps (30) à un angle le plus plat possible.

5. Palpeur ultrasons selon la revendication 1, **caractérisé en ce qu'**un interrupteur de démarrage (50) est prévu qui est de préférence disposé sur le boîtier (20) et qu'avec cet interrupteur de démarrage (50) la mémoire (46) de mouvement mémorise l'endroit (48) actuel au moment de l'actionnement de l'interrupteur de démarrage (50) comme nouvel endroit de départ pour de nouveaux déplacements.

6. Palpeur ultrasons selon la revendication 1, **caractérisé en ce qu'**il comporte un corps de protection (26) qui forme une surface de limitation librement accessible du boîtier (20), cette surface de limitation représentant la surface de contact, et que ce corps de protection (26) est transparent, si possible limpide, et est notamment réalisé en acrylique.

7. Palpeur ultrasons selon la revendication 6, **caractérisé en ce que** la caméra numérique (36, 37) est disposée sur la face interne du corps de protection (26).
